# EUROPEAN PATENT SPECIFICATION

(11) **EP 1 832 160 B1**
(45) Date of publication and mention of the grant of the patent: **23.02.2011**
(21) Application number: 07103659.4
(22) Date of filing: 07.03.2007
(51) Int. Cl.: A01G 17/06

(54) **Improved spring-type spacer member, in particular for rows of vines**
Verbesserter federartiger Abstandhalter, speziell für Weinrebenreihen
Élément espaceur à ressort amélioré, spécialement pour les rangs de vigne

(30) Priority: 09.03.2006 IT PC20060003 U
(43) Date of publication of application: 12.09.2007
(73) Proprietor: MOLLIFICIO BORTOLUSSI S.R.L., 33080 Fiume Veneto (PN) (IT)
(72) Inventor: Zavattarelli, Stefano, 29100, Piacenza (IT)
(74) Representative: Giugni, Valter

(56) References cited:
- EP-A1- 0 876 756
- FR-A1- 2 840 766
- FR-A1- 2 866 783

## Description

The present invention refers to an improved spring-type spacer member according to claim 1, in particular for vine or similar rows.The component parts thereof are specially conformed so as to enable the spacer member itself to be most easily and conveniently switched over from an open configuration, in which the support wires for the vine-shoots are spaced apart from the respective support poles, to a closed or clamped position, in which the wires are brought back near the poles.

More particularly, the spacer member comprises two side arms that can be opened apart, and that have - at the free end thereof - an eyelet provided to enable the support wires of the vine-shoots to pass therethrough, wherein such arms - on the opposite side thereof and via an elastic coil or circlet - join into a stationary support arm to be applied to the pole, which carries - in the upper portion thereof - a hook or similar contrivance enabling the free end portion of the spring arm to be quickly, easily and conveniently hooked up there when said spring arm is pushed by the operator towards the pole, to eventually retain it in this position.

The spacer member is quite more convenient and practicable in use than prior-art springs of this kind, thanks mainly to its configuration that enables the operator to most quickly and easily hook up the openable arm to the stationary stem, without having to pass the same arm through the vegetation, as it generally occurs with prior-art spacer members.

The present invention falls into the sector of wine-growing or viticulture equipment in general and, in particular, relates to the branch dealing with devices and tools used to dress vines into rows.

As generally known, when the shoots of vines draw out, i.e. become longer as the related plants keep growing, the need arises for measures to be taken in view of anyway keeping them as close as possible to the related row, so as to prevent them from obstructing the way between adjacent rows and being of hindrance to the passage therethrough of the machines and the operators that are involved in working in the vineyard during the cultivation time.

For many years, this has been ensured manually by tying up the vine shoots one by one to metal wires stretched out between the poles and extending substantially parallel to the ground. More recently, use has started to be made to this purpose of particular support springs comprising two elastic arms that are fastened at the base thereof to the support poles by means of hooks or similar arrangements, and that are provided, at the free ends thereof, with a coil defining a ringlet through which the metal wires for tying the vine-shoots to are caused to pass.

As the vine shoots keep growing longer, however, the weight on such arms increases and the arms themselves tend to open apart, thereby allowing the shoots to draw out and move away from the poles sustaining the vine rows. Once the shoots have developed to an appreciable extent, the need then arises for the operators to push the ends of the springs upwards before manually clamping them together again and fastening them to the hooks or similar arrangements provided on the poles.

Still more recently, there have been introduced on the market spring-type spacer members made of steel wire in a single-piece, unitary construction so as to feature two arms provided at the free ends thereof with respective eyelets for the shoots supporting wires to pass therethrough, and forming an elastic coil joining said two arms together at the base or lower portion thereof.

One of such prior-art spacer members is disclosed in EP 0 876 756 and it can be seen in the illustrations of Figure 1 and Figure 2, in which it is represented in the opened-apart and closed or clamped states thereof, respectively. In these Figures, the two arms are generally indicated at 1 and 2, respectively, whereas the reference numeral 3 is used to indicate the elastic coil joining said arms together.

In this spacer member, at the upper end of one of the arms thereof there is provided a prolongation 4 extending towards the opposite arm and terminating - at the extremity thereof - with a portion 5 folded into a hook-like shape.

The prior-art spacer member being described is fastened to the pole by means of U-shaped nails, or the like, in correspondence to the elastic coil 3 at the base thereof, while the two side arms remain free, i.e. unfastened.

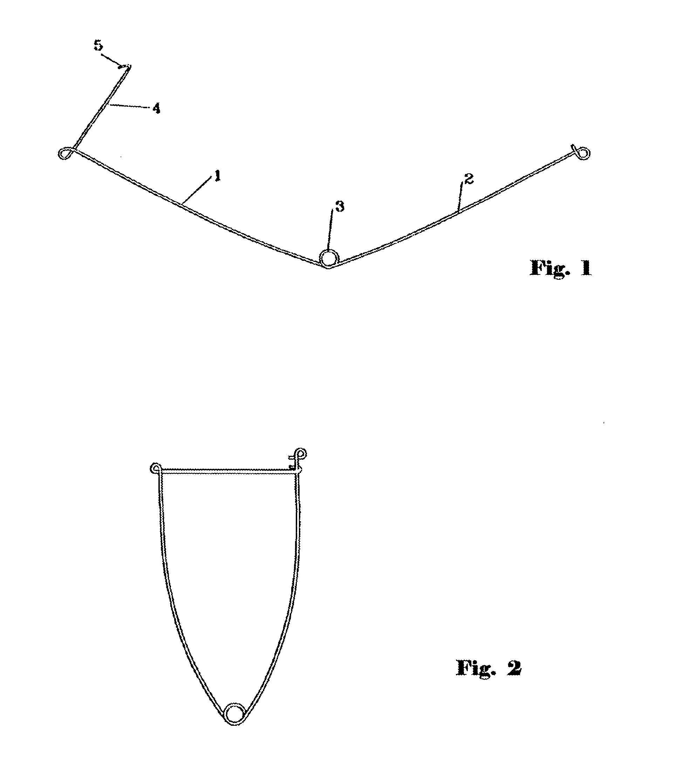

When, owing to the vine shoots weighing on them, the arms tend to open apart, an operator has to step in by bending them again upwards and clasping the arm 2 with the hook 5 of the arm 1, thereby setting the spring member again into the closed, i.e. clamped configuration illustrated in Figure 2.

Although quite effective, such solution can however be further improved, particularly as far as the practicableness and convenience in the use thereof are concerned.

The spacer member being discussed, in fact, proves quite inconvenient when used by a single operator, since, to clamp it together, the latter has to move the arm thereof through the shoots and the leaves of the vine plant to then seize the arm lying on the opposite side and pull it towards the pole, so as to be able to hook it up to the second arm.

Such handling, when the vine plant reaches full growth and, therefore, the shoots and leaves thereof form quite thick a vegetation, turns often out as being so awkward to carry out as to make it preferable, and certainly more appropriate, for two operators to be employed on the two opposite sides of the vine row to carry out the job, wherein each one of them would then push a respective one of the arms of the spacer member upwards until both arms are ultimately clasped together.

This is exactly where the present invention fits in by providing an improved spring-type spacer member which, thanks to the peculiar conformation of its parts, proves much more convenient and practicable in use, since it is provided with a stationary arm, or middle support, that is in turn provided with hook-like means protruding towards the respective flexible arms of the spacer member so as to be easily engaged, i.e. clasped by such arms for clamping.

The need is thereby done away with for the operator to seize the arm that lies on the opposite side of the vine row, and that, owing to the vegetation, may therefore not be clearly visible or easily reached.

Features and advantages of the present invention will now be more readily understood from the description that is given below by way of nonlimiting example with reference to the accompanying drawings, in which:
- Figures 1 and 2 are schematical views of a spring-type spacer member according to the prior art, as viewed in the opened-up and clamped state thereof, respectively;
- Figure 3 is a schematical view of a spring-type spacer member according to the present invention, as viewed in the opened-up state thereof; and
- Figure 4 is a schematical view of a spring-type spacer member according to the present invention, as viewed in the clamped state thereof.

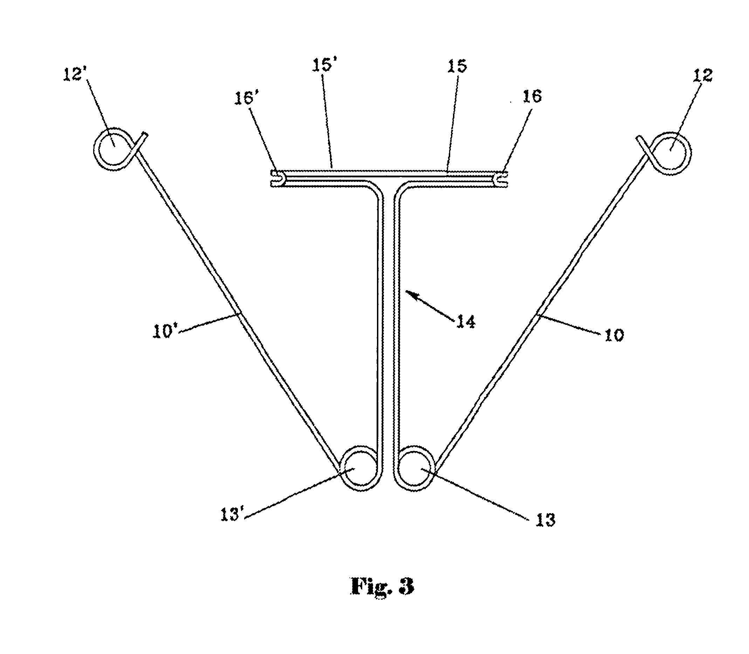

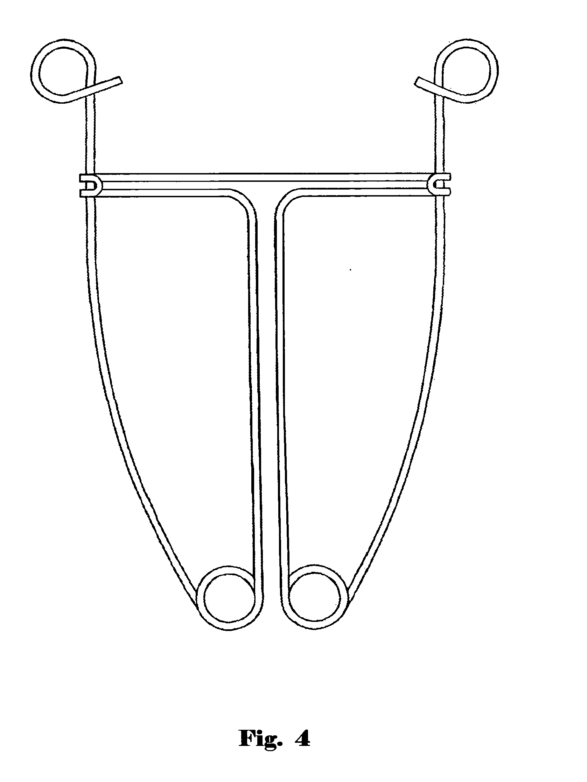

With reference to Figures 3 and 4, the spring-type spacer member according to the present invention comprises a pair of arms 10 and 10' having the upper ends thereof folded up to form respective eyelets 12, 12', through which the wires supporting the vine rows are then due to pass, and forming, on the opposite side thereof, one or more coils or ringlets 13, 13' that join into a central or middle stem 14. In the upper portion thereof, this middle stem is so shaped as to define a pair of arms 15, 15' extending towards the respective flexible arms 10 and 10', and being further bent backwards at the respective extremities thereof so as to form a pair of hooks 16, 16' adapted to engage and clasp the spring arms 10 and 10' when the latter are brought into the clamped position thereof.

When configured in the above-described manner, the spacer member according to the present invention can be easily made in a single-piece, unitary construction through proper shaping of a steel wire.

In the lower portion of the inventive spacer member there may be provided a single elastic coil or ringlet 13; however, there will preferably be provided two such elastic coils in view of increasing the number of fastening points of the spring-type spacer member to the related pole, so as to ensure an improved, greater stability thereof in the long term.

The way in which the inventive spring-type spacer member is used and applied is most simple.

Upon fastening the spacer members to the poles and running the support wires through the eyelets 12, the whole installation is ready for use.

When the weight of the vine shoots upon the support wires increases due to the growth of the same vine shoots, and when the arms tend as a result of this weight to open apart to an excessive extent, an operator passes by and just pushes each arm upwards, thereby causing it to engage the hook 16 of the middle support stem.

This can be done in a very convenient, easy manner, since - owing to the hook being located on the same side as the arm - no need arises for the operator to slip or, better, thrust his/her hand to the opposite side, through branches, leaves and the like, to tentatively find the hook attached to the second arm, as it occurs with prior-art systems, actually.

It will be readily appreciated that the materials used, as well as the shapes and the sizing of the individual items of the inventive spacer member as described above may each time be selected so as to more appropriately meet the particular requirements or suit the particular application.

## Claims

1. Spring-type spacer member for poles, in particular for vine rows and similar applications, of the kind comprising a plurality of flexible side arms (10, 10') terminating at the free end thereof with an eyelet (12, 12') for the wire used to support the vine shoots to pass therethrough, **characterized in that** it includes a middle stem (14) for attachment to the support pole, said middle stem (14) being provided in the upper portion thereof with a hook (16, 16') adapted to engage the flexible arm (10, 10') when the spacer member is clasped together.

2. Spring-type spacer member according to claim 1 **characterized in that** each of said side arms (10, 10') is in the form of a spring-type arm departing from a lower portion of said middle stem (14) and **in that**, for each of said spring-type arm (10, 10'), said middle stem (14) is provided in the upper portion thereof with an arm-like extension (15, 15') protruding towards said spring-type arm (10, 10'), said extension being folded at an extremity thereof so as to form said hook (16, 16').

3. Spring-type spacer member according to claims 2, **characterized in that** it includes two spring-type arms (10, 10') extending on the opposite sides of said middle stem (14).

4. Spring-type spacer member according to any of the preceding claims, **characterized in that** it is made in a single-piece unitary construction by forming a steel wire accordingly.

5. Spring-type spacer member according to any of the preceding claims, **characterized in that** it includes a pair of spring-type arms (10, 10'), each one of them joining at the lower portion thereof into said middle stem (14) via an elastic, spring-type coil or ringlet (13, 13').

6. Spring-type spacer member according to any of the preceding claims, **characterized in that** said middle stem (14) is formed by a couple of parallel and spaced-apart rods configured for extending along the longitudinal direction of said support pole.

## Patentansprüche

1. Feder-Abstandshalteelement für Pfähle, insbesondere für Weinrebenreihen und ähnliche Einsatzzwecke, des Typs, der eine Vielzahl flexibler seitlicher Arme (10, 10') umfasst, die an ihrem freien Ende mit einer Öse (12, 12') enden, durch die der Draht hindurch tritt, der dazu dient, die Weinrebentriebe zu tragen, **dadurch gekennzeichnet, dass** er einen Mittelschaft (14) zur Anbringung an dem Stützpfosten enthält, wobei der Mittelschaft (14) in seinem oberen Abschnitt mit einem Haken (16, 16') versehen ist, der so eingerichtet ist, dass er mit dem flexiblen Arm (10, 10') in Eingriff kommt, wenn das Abstandshalteelement geschlossen wird.

2. Feder-Abstandshalteelement nach Anspruch 1, **dadurch gekennzeichnet, dass** jeder der seitlichen Arme (10, 10') die Form eines Feder-Arms hat, der von einem unteren Abschnitt des Mittelschaftes (14) ausgeht, und dadurch, dass für jeden der Feder-Arme (10, 10') der Mittelschaft (14) an seinem oberen Abschnitt mit einer armartigen Verlängerung (15, 15') versehen ist, die auf den Feder-Arm (10, 10') zu vorsteht, wobei die Verlängerung an einem äußeren Ende derselben so umgebogen ist, dass sie den Haken (16, 16') bildet.

3. Feder-Abstandshalteelement nach Anspruch 2, **dadurch gekennzeichnet, dass** es zwei Feder-Arme (10, 10') enthält, die sich an den einander gegenüberliegenden Seiten des Mittelschafts (14) erstrecken.

4. Feder-Abstandshalteelement nach einem der vorangehenden Ansprüche, **dadurch gekennzeichnet, dass** es aus einer einteiligen, einheitlichen Konstruktion hergestellt wird, indem ein Stahldraht entsprechend geformt wird.

5. Feder-Abstandshalteelement nach einem der vorangehenden Ansprüche, **dadurch gekennzeichnet, dass** es ein Paar Feder-Arme (10, 10') enthält, von denen jeder an seinem unteren Abschnitt über eine elastische Feder-Windung oder einen kleinen Ring (13, 13') in den Mittelschaft (14) übergeht.

6. Feder-Abstandshalteelement nach einem der vorangehenden Ansprüche, **dadurch gekennzeichnet, dass** der Mittelschaft (14) durch ein Paar paralleler und beabstandeter Stäbe gebildet wird, die so eingerichtet sind, dass sie sich in der Längsrichtung des Stützpfostens erstrecken.

## Revendications

1. Elément d'écartement de type ressort pour piquets, en particulier pour rangées de vigne et applications similaires, du type comprenant une pluralité de bras latéraux flexibles (10, 10') se terminant à leur extrémité libre par un oeillet (12, 12') destiné à être traversé par le fil utilisé pour soutenir les pousses de vigne, **caractérisé en ce qu'**il inclut une tige médiane (14) destinée à la fixation au piquet de support, ladite tige médiane (14) étant dotée dans sa portion supérieure d'un crochet (16, 16') adapté pour s'engager avec le bras flexible (10, 10') lorsque l'élément d'écartement est fermé.

2. Elément d'écartement de type ressort selon la revendication 1, **caractérisé en ce que** chacun desdits bras latéraux (10, 10') se présente sous la forme d'un bras de type ressort s'écartant d'une portion inférieure de ladite tige médiane (14) et **en ce que**, pour chacun desdits bras de type ressort (10, 10'), ladite tige médiane (14) est dotée dans sa portion supérieure d'une extension de type bras (15, 15') saillant en direction dudit bras de type ressort (10, 10'), ladite extension étant pliée à une de ses extrémités de manière à former ledit crochet (16, 16').

3. Elément d'écartement de type ressort selon la revendication 2, **caractérisé en ce qu'**il inclut deux bras de type ressort (10, 10') s'étendant sur les côtés opposés ce ladite tige médiane (14).

4. Elément d'écartement de type ressort selon l'une quelconque des revendications précédentes, **caractérisé en ce qu'**il est fabriqué en une construction unitaire d'une seule pièce en mettant en forme un fil d'acier de façon appropriée.

5. Elément d'écartement de type ressort selon l'une quelconque des revendications précédentes, **caractérisé en ce qu'**il inclut une paire de bras de type ressort (10, 10'), chacun d'eux se raccordant à son extrémité inférieure à ladite tige médiane (14) par le biais d'une spire ou d'une boucle élastique de type ressort (13, 13').

6. Elément d'écartement de type ressort selon l'une quelconque des revendications précédentes, **caractérisé en ce** ladite tige médiane (14) est formée par un couple de barres, parallèles et espacées l'une de l'autre, qui sont configurées pour s'étendre dans la direction longitudinale dudit piquet de support.
